# EUROPEAN PATENT APPLICATION

(11) **EP 1 557 801 A2**
(43) Date of publication of application: **27.07.2005**
(21) Application number: 05001034.7
(22) Date of filing: 19.01.2005
(51) Int. Cl.: G07F 17/32

(54) **Award payment system**

(30) Priority: 21.01.2004 JP 2004013424
(71) Applicant: Aruze Corp., Tokyo 135-0063 (JP)
(72) Inventor: Okada, Kazuo, Tokyo 135-0063 (JP); Fujimoto, Jun, Tokyo 135-0063 (JP)
(74) Representative: Grünecker, Kinkeldey, Stockmair & Schwanhäusser Anwaltssozietät

(57) **Abstract**

The present invention provides an award money payment system (10) for paying out a predetermined award money to a user when the user wins an award in a game using a gaming machine. The award money payment system (10) includes an award ticket issuing device (103) which prepares and issues an award ticket which is related with identification information of an award winner when the award winner wins the award in the gaming machine; and an award ticket accounting device (104) which reads out information recorded in the award ticket and transfers an award money to a designated transfer destination account on the condition that the identification of an award ticket bearer is established. When the transfer account is not designated, the award ticket accounting device (104) acquires the personal confirmation information of the bearer of the award ticket, performs the request for opening the account together with the personal confirmation information, and performs the request for transfer of the award money to the transfer account opened in response to the request for opening the account.

## Description

### CROSS-REFERENCES TO THE RELATED APPLICATIONS

This application is based upon and claims the priority from a prior Japanese patent application No. 2004-013424, filed in Japan on January 21, 2004, entire contents of which are incorporated herein by reference.

This application is related to a co-pending U.S. patent application referred to as a prior Japanese patent application No. 2004-019847 filed in Japan on January 28, 2004.

### BACKGROUND OF THE INVENTION

### 1. FIELD OF THE INVENTION:

The present invention relates to an award money payment system, an award ticket issuing device and an award ticket accounting device, and more particularly to an award money payment system, an award ticket issuing device and an award ticket accounting device which perform the payment of an award money won by a player using a gaming machine or the like, for example, irrespective of the presence or the non-presence of the designation of a transfer destination account.

### 2. RELATED ART:

Recently, along with the development of the information communication techniques and the improvement and the spreading of the communication infrastructure, the circulation of various information via the Internet is realized. Also with respect to the transfer of an award money won by a user in a public lottery or the like, a system which makes use of the communication network has been proposed thus allowing a lottery winner to receive the award money without taking the trouble to attend to an award money payout institution such as a clerk of a specified bank.

As a payment/reception technique of the award money of the public lottery, for example, there has been proposed a following system in Japanese Laid-open Patent Publication 2002-7631 (see paragraphs [0012] to [0013], Fig. 2). In this patent document, for example, a sales server which receives a public lottery purchase wish from a user asks a bank-oriented system to make a direct debit from the user' s account. Then, the bank-oriented system makes the direct debit from the user's account. The sales server acquires a drawing result of award numbers of the public lottery from an existing public lottery system and asks the bank-oriented system to transfer the award money to the user's account depending on the drawing result.

### SUMMARY OF THE INVENTION

However, in the above-mentioned payment/reception technique of the award money, the user has to open an account which becomes a transfer destination of the award money at least at the time of purchasing the public lottery or the like or at the time of paying out the award money (at the time of accounting the awardmoney) and hence, it is difficult for a new user to play the game which aims at the acquisition of award money lightheartedly or when he or she makes up his or her mind to play such a game.

Accordingly, it is an object of the present invention to provide a method and a system for paying out/receiving an award money which allows a user to open a transaction account to which the award money is transferred based on a result of the identification for opening the account whereby even the user who has no transaction account for receiving the award money can make use of the method or the system at any desired time.

The present invention which can achieve the above-mentioned object has following constitutional features. The first aspect of the present invention is proposed as an award money payment system which pays a predetermined award money to a user when the user wins an award in a game.

The system is characterized by including an award ticket issuing device which prepares and issues an award ticket which is related with identification information of the user when the user wins an award in a gaming machine, and an award ticket accounting device which reads out information recorded in the award ticket and transfers an award money to a designated transfer destination account on a condition that identification of an award ticket bearer is established.

In the above-mentioned award money payment system, when the transfer destination account is not designated, the award ticket accounting device may acquire the identification information of the bearer of the award ticket, may request the opening of account together with the identification information, and may request the transfer of the award money to the transfer destination account which is opened in response to the request for the opening of the account. Due to such a constitution, even when the user does not prepare the transfer destination account, the user can enjoy the game of the gaming machine at any time and, at the same time, can receive the payment of the award money when the user wins the award.

The second aspect of the present invention is proposed as an award ticket issuing device. The award ticket issuing device includes an identification information acquiring unit which acquires identification information of a holder of an award ticket upon reception of a notification of an award, and an award ticket issuing unit which writes the identification information which is acquired by the identification information acquiring unit, award ticket identification information (an award ticket ID) and award amount information in a storage medium which constitutes an award ticket in a state that the identification information and the award ticket identification information are related to each other.

The third aspect of the present invention is proposed as an award ticket accounting device. The award ticket accounting device includes an identification information acquiring unit which acquires identification information of a bearer of an award ticket, an award ticket accounting control unit which reads information stored in the award ticket, acquires the identification information of a holder of the award ticket based on the information stored in the award ticket, and performs identification using the identification information of the bearer of the award ticket acquired by the identification information acquiring unit and the identification information of the holder of the award ticket, an account opening unit (an account opening processing unit) which requests the opening of a transfer destination account which constitutesatransfer destination of the award money on the condition that the identification is successfully performed by the award ticket accounting control unit, and a transfer processing unit (an award money transfer processing unit) which allows the transfer of the award money to the transfer destination account which is opened in response to the request of the account opening unit.

In this award ticket accounting device, the award ticket accounting device further includes a personal confirmation information acquiring unit which acquires personal confirmation information of the bearer of the award ticket, and the account opening unit may request the opening of transfer destination account together with the personal confirmation information which is acquired by the personal confirmation information acquiring unit. Due to such a constitution, even when the user does not prepare the transfer destination account, the user can enjoy the game of the gaming machine at any time and can receive the award money when the user wins the award.

The transaction account to which the award money is transferred can be opened based on the result of the personal confirmation for opening the account and hence, it is possible to provide the award money payment system which allows the use of the gaming machine or the like even by a user who does not have the transaction account for receiving the award money.

### BRIEF DESCRIPTION OF THE DRAWINGS

Fig. 1 is a block diagram showing a constitutional example of an award money payment system;
Fig. 2 is a functional block diagram showing a constitutional example of a gaming machine;
Fig. 3 is a function al block diagram showing a constitutional example of an award ticket information administrating unit;
Fig. 4A is a view showing a data constitutional example of a record which is stored in an award ticket information database unit;
Fig. 4B is a view showing a data constitutional example of a record which is stored in a user information database unit;
Fig. 5 is a functional block diagram showing a constitutional example of an award ticket issuing device;
Fig. 6 is a view showing an example of data which is written in a storage medium which constitutes an award ticket;
Fig. 7 is a functional block diagram showing a constitutional example of an award ticket accounting device;
Fig. 8 is a flowchart showing an operational example of the award ticket accounting device;
Fig. 9 is a sequence diagram showing an operational example of an award money payment system;
Fig. 10 is a sequence diagram which follows the sequence diagram shown in Fig. 9; and
Fig. 11 is a sequence diagram which follows the sequence diagram shown in Fig. 9.

### DESCRIPTION OF THE PREFERRED EMBODIMENTS

An award money payment system and an award money payment method which is realized as an operation of the award money payment system according to an embodiment of the present invention are explained in conjunction with drawings hereinafter.

### [1. Constitutional example of award money payment system]

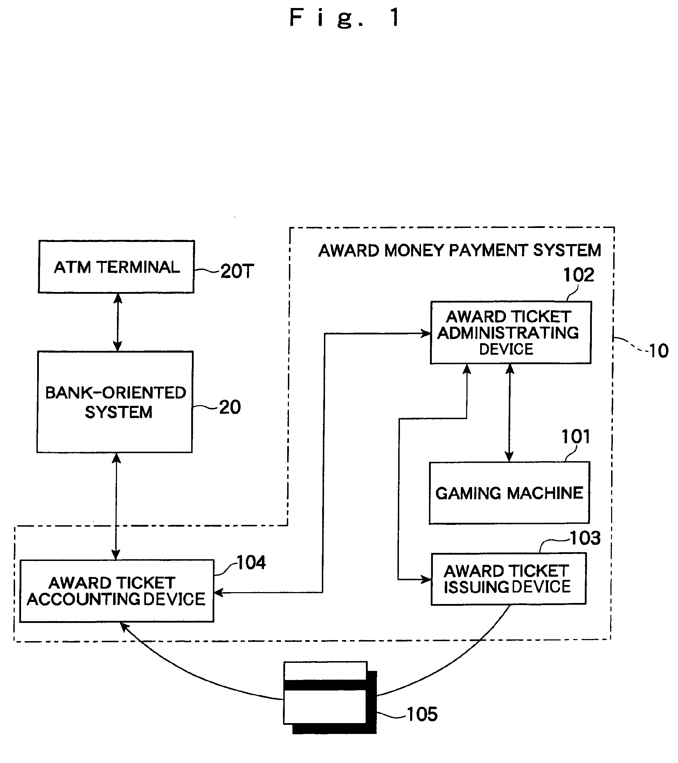

First of all, a constitutional example of the whole award money payment system is explained in conjunction with Fig. 1. Fig. 1 is a block diagram showing the constitutional example of the award money payment system according to an embodiment of the present invention.

The award money payment system 10 issues an award ticket 105 for receiving the payment of an award money which a user acquires by winning an award, performs the payment of the award money after confirming the authenticity of the issued award ticket 105, and performs the payment of the award money by requesting the opening of an account to an external bank-oriented system 20 when the user does not have a transfer destination account for receiving the payment at the time of paying out the award money.

Here, "the award ticket" means a recording medium which stores information which is readable by the award ticket accounting device 104 and is exchangeable with money or a part which contains such a storage medium. In this specification, the award ticket may be an IC card, a magnetic card, a paper sheet to which a barcode is applied or the like, for example. Further, it is also possible to use a mobile telephone, a semiconductor memory card, a semiconductor memory stick or the like as the award ticket. Further, although the "award ticket" is referred in this specification for facilitating the understanding of the invention, the award ticket does not always have a shape and a material as a "ticket" andmay have any shape and material provided that the award ticket constitutes a portion which can be read by the award ticket accounting device 104. For example, as the award ticket which can be used in this specification, it is possible to use a medal-type token which incorporates an IC chip therein, a strap which is provided with an IC tag or the like.

The award money payment system 10 includes a gaming machine 101 which determines the winning of the award and decides an award amount, an award ticket administrating device 102 which is connected with the gaming machine 101, the award ticket issuing device 103 which is connected with the award ticket administrating device 102, and an award ticket accounting device 104 which is connected with the award ticket administrating device 102. Here, the award ticket accounting device 104 is connected with a bank-oriented system20 of a system which constitutes a system different from the award money payment system 10. Further, an ATM (Automated Teller Machine) 20T by which the user receives the payout of the award money is connected with the bank-oriented system 20 so that the user can pull out cash corresponding to the award money.

Hereinafter, the respective constitutional elements of the award money payment system 10 are explained.

### [1.1. Gaming machine]

The gaming machine 101 is a device which is configured to allow the user to acquire the award money under predetermined conditions and is, for example, a slot machine, a card game machine with which users can play poker, black jack and the like, a public lottery unit, a bingo game unit, pachinko, pachinko slot machine or the like.

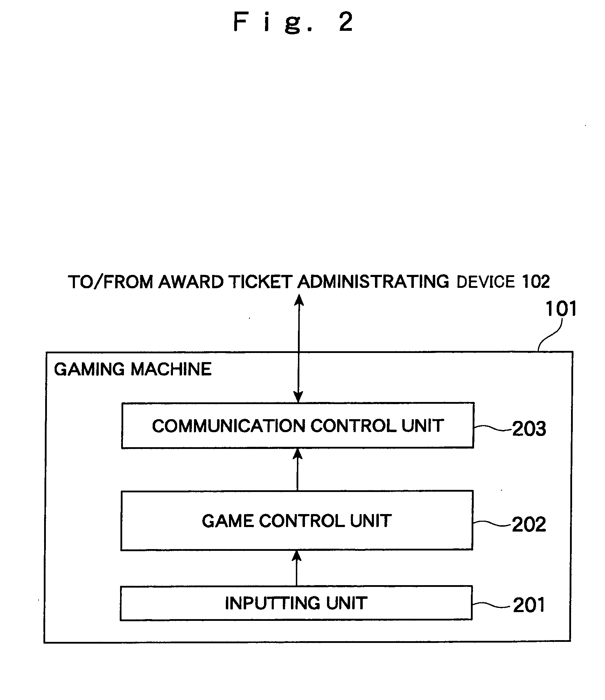

Fig. 2 shows a constitutional example of the gaming machine 101. In the constitutional example shown in the drawing, the gaming machine 101 includes an inputting unit 201 which receives a control from the user, a game control unit 202 which executes a game or the like in accordance with a signal from the inputting unit 201 and determines the winning or the losing of the award and the decision of the award amount, and a communication control unit 203 which, upon receiving information on the winning of the award and the information indicative of the award amount from the game control unit 202, establishes the connection between the communication control unit 203 and the award ticket administrating device 102 and transmits these information to the award ticket administrating device 102.

### [1.2. Award ticket administrating device]

The award ticket administrating device 102 has a function of receiving and storing information indicative of the winning of the award and the information indicative of the award money from the gaming machine 101 and a function of instructing the award ticket issuing device 103 to issue the award ticket 105 based on these information. Further, the award ticket administrating device 102 may also include a function of performing the identification of an award ticket accounting requester based on the identification information transmitted from the award ticket accounting device 104. Here, "identification information" is information which is capable of confirming the identity between the award ticket accounting requester and a person who receives the issuance of the award ticket 105. The identification information may be, for example, information for so-called biometrics identification (vocal print, finger print, retina, iris, facial image, vein pattern or the like), ID, password or the like.

The award ticket administrating device 102 is a unit which includes an arithmetic processing unit (CPU), a main memory (RAM), a read-only memory (ROM), an input/output unit (I/O) , and an external storage unit such as a hard disc unit or the like. The award ticket administrating device 102 is also an information processing unit which is constituted of, for example, a computer, a work station, a WWW (World Wide Web) server, or a combination of the WWW server, a database server and an application server. In the above-mentioned ROM, the hard disc unit or the like, a program which allows the information processing unit to function as the award ticket administrating device 102 or a program which allows the computer to partially execute the award ticket payment method is stored. By introducing the program to the main memory and by allowing the CPU to execute the program, the award ticket administrating device 102 is realized or the award ticket payment method is partially executed. Further, the above-mentioned program is not always stored in the storage unit in the inside of the information processing unit and may be provided from an external unit (for example, ASP (server of application service provider) and may be introduced into the main memory.

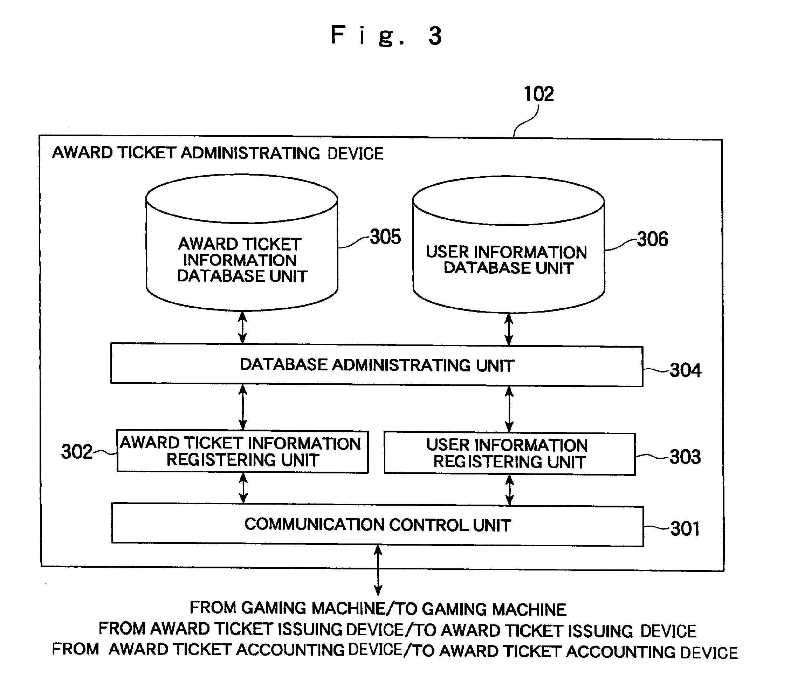

Fig. 3 is a functional block diagram showing a constitutional example of the award ticket administrating device 102. The award ticket administrating device 102 includes a communication control unit 301 which serves to perform the communication connection of the award ticket administrating device 102 with the gaming machine 101, the award ticket issuing device 103 and the award ticket accounting device 104, an award ticket information registering unit 302 and an identification executing unit 303 which are connected with the communication control unit 301, a database administrating unit 304 which is connected with the award ticket information registering unit 302 and the identification executing unit 303, and an award ticket information database unit 305 and a user information database unit 306 which are connectedwith the database administrating unit 304.

The communication control unit 301 establishes the communication with the gaming machine 101 and the like by executing a predetermined communication protocol (protocol stack) and performs the transmission/reception of the data. The award ticket information registering unit 302, upon receiving the information on the winning of the award and the award amount from the gaming machine 101, allows the award ticket information database unit 305 to store the data on the award ticket 105 based on these information. The identification executing unit 303 compares the identificationinformationtransmittedfromtheawardticket accounting device 104 with the stored identification information corresponding to the award ticket 105 which is stored in the award ticket information database unit 305 or the user information database unit 306 thus performing the determination of identification. Then, the identification executing unit 303 instructs the award ticket accounting device 104 to notify to a result of the identification determination to the communication control unit 301. The database administrating unit 304, in response to a request from the award ticket information registering unit 302 and the identification executing unit 303, performs the reading of data, writing of data and the like to and from the award ticket information database unit 305 and the user information database unit 306.

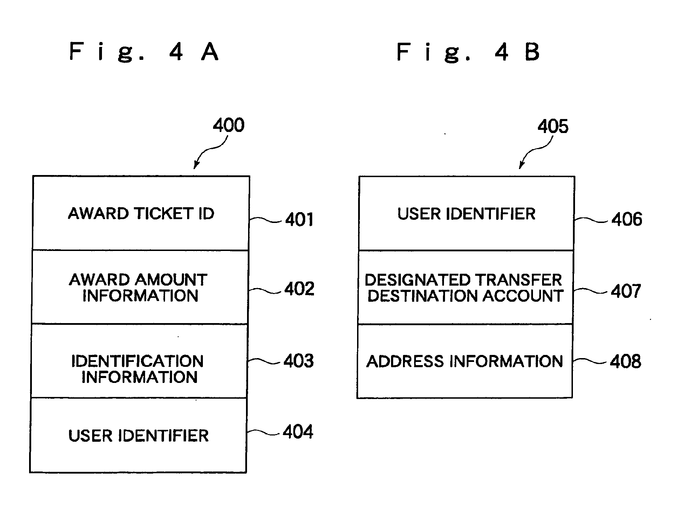

The award ticket information database unit 305 stores information for specifying the award ticket 105 and the information indicative of the award money with respect to one award ticket 105 and the information indicative of the holder of the award ticket 105 in a state that these information are related to each other. Fig. 4A is a data constitutional example of a record which the award ticket information database unit 305 stores. The award ticket information database unit 305 stores the record 400 shown in Fig. 4A for every one award ticket 105, wherein each record 400 includes an award ticket ID 401 which is information for specifying the award ticket 105, award amount information 402 which is information indicative of the award money, identification information 403 which is used for the identification, and a user identifier 404 which specifies the holder of the award ticket 105. The identification information 403 is identification information which is acquired at the time of the issuing the award ticket at the award ticket issuing device 103.

The user information database unit 306 stores information on the user. Fig. 4B shows the data constitutional example of a record which the user information database unit 306 stores. The user information database unit 306 stores the record 405 shown in Fig. 4B for every user and each record 405 includes a user identifier 406 which is information for specifying the user, transfer destination account information (financial code, branch code, account number and the like) 407 when the user preliminarily designates the transfer destination account of the award money, and address information (telephone number at home/at work, electronic mail address, address and the like) 408. In the user information database unit 306, information which is obtained at the time of user registration is mainly stored. The user registration may be performed when the user expresses his/her wish to use the award money payment system to a management/administrator of the award money payment system.

The award ticket information database unit 305 and the user information database unit 306 can be referenced with each other using the user identifiers 404, 406 as keys. Accordingly, it is possible to retrieve the stored content of the user information database unit 306 using the user identifier 404 of the award ticket information database unit 305 as the key and to extract the designated transfer destination account of the user. Here, it is not always necessary to separate the database unit into the award ticket information database unit 305 and the user information database unit 306. That is, the award ticket administrating device 102 can be realized by the constitution in which storage contents of both of the award ticket information database unit 305 and the user information database unit 306 may be handled using one database.

Further, there arises no problem even when the identification information 403 is stored in the user information database unit 306 in place of the award ticket information database unit 305. This is because that by using the user identifier 404 in the inside of the record 400 as the key, it is possible to extract the identification information from the record 405 of the user information database unit 306.

### [Award ticket issuing device]

Next, the award ticket issuing device 103 is explained. The award ticket issuing device 103 has a function of preparing and issuing the award ticket 105 which is made relevant to the identification information in cooperation with the award ticket administrating device 102 when the user wins the award in the gaming machine 101.

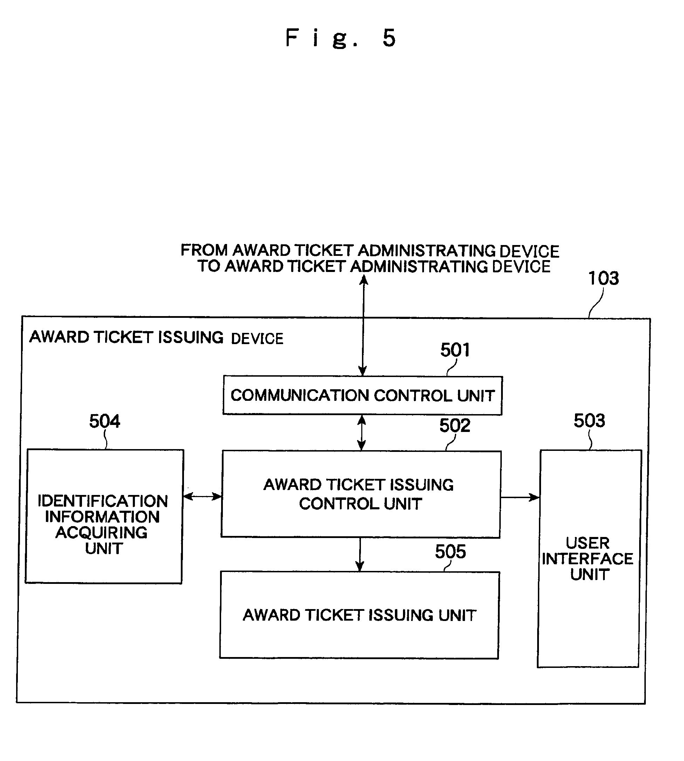

Fig. 5 is a functional block diagram showing a constitutional example of the award ticket issuing device 103. In the constitutional example shown in the drawing, the award ticket issuing device 103 includes a communication control unit 501 which is connected with the award ticket administrating device 102, an award ticket issuing control unit 502 which is connected with the communication control unit 501, a user interface unit 503 which is connected with the award ticket issuing control unit 502, an identification information acquiring unit 504, and an award ticket issuing unit 505.

The communication control unit 501 has a function of performing the transmission/reception of data by establishing the connection between the communication control unit 501 and the award ticket administrating device 102 by executing a predetermined communication protocol (protocol stack).

The award ticket issuing control unit 502 performs the overall control of operations including the operational timing, the starting of the operation, the completion of the operation of the communication control unit 501, the user interface unit 503, identification information acquiring unit 504 and the award ticket issuing unit 505. The award ticket issuing control unit 502 instructs the award ticket issuing unit 505 to write various information (the award ticket ID 401, the award amount information 402 and the like) which are transmitted from the award ticket administrating device 102 on the award ticket 105 together with the identification information acquired by the identification information acquiring unit 504.

The user interface unit 503 has a function of transmitting messages related to the issuance of the award ticket to the user as well as a function of receiving the inputting of the user and, for example, includes a liquid crystal touch panel and a driver thereof. That is, the user interface unit 503 suitably displays messages such as "Issue the award ticket ? YES/NO", "Register identification information. Place your right forefinger on a scanner.", "The issuance of the award ticket is completed. ", an execution button, a confirmation button, a cancellation button and the like.

The identification information acquiring unit 504 has a function of acquiring the identification information of an authorized holder of the award ticket 105. For example, the identification information acquiring unit 504 reads out a vocal print, a finger print, a retina, an iris, a facial image, a vein pattern or the like and extracts a pattern from the read-out image data and generates the identification information. The generated identification information is transmitted to the award ticket issuing control unit 502 and may be written in the award ticket 105 at the time of the issuing the award ticket 105 or may be transmitted to and stored in the award ticket administrating device 102 via the communication control unit 501.

The award ticket issuing unit 505 has a function of performing the writing of the information necessary for the payment of the award money to a storage medium which constitutes the award ticket 105 in a state before issuance and a function of outputting the storage medium on which the information is already written as the award ticket 105. With respect to the award ticket issuing unit 505, for example, a card writer of a magnetic card or an IC card or a communication mechanism (an infrared communication mechanism, Bluetooth or the like) which can transmit data to a mobile telephone when the storage medium is a mobile phone can be used as the award ticket issuing unit 505.

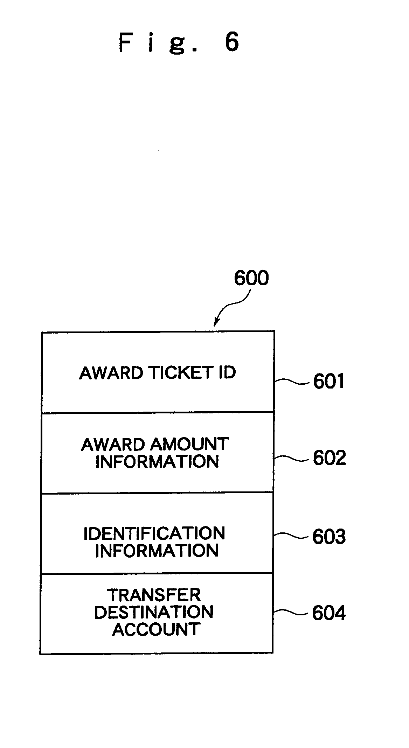

Fig. 6 is a view showing an example of data written in the storage medium which constitutes the award ticket 105. In the storage medium, as information 600 necessary for the payment of the award money (the accounting of the award ticket), an award ticket ID 601, an award amount 602, personal confirmation information 603 and a transfer destination account 604 are written.

The award ticket ID 601, the award amount 602 and the transfer destination account 604 are the award ticket ID 401, the award amount 402 and the transfer destination account 404 which are stored in the award ticket administrating device 102 and the information which are transmitted from the award ticket administrating device 102 are written in the award ticket 105 as the award ticket ID 601, the award amount 602 and the transfer destination account 604. Here, when the transfer destination account is not designated by the user, the data corresponding to the transfer destination account 604 is not written or the data which indicates that the transfer destination account is not yet designated is written. The identification information 603 is the data which is generated by the identification information acquiring unit 504 at the time of performing the award ticket issuing processing.

### [Award ticket accounting device]

The award ticket accounting device 104 has a function of performing the transfer of the award money to the designated transfer destination account under the conditions that the authenticity of the award ticket 105 is proved and the identification of the award ticket holder is established when the user submits the award ticket 105 and requests for the payment of the award money. The award ticket accounting device 104 also has a function of, when there is no such a transfer destination account, urging the user to submit the personal confirmation information and requests the user to open the transfer destination account based on the personal confirmation information and to perform the transfer of the award money to the opened account.

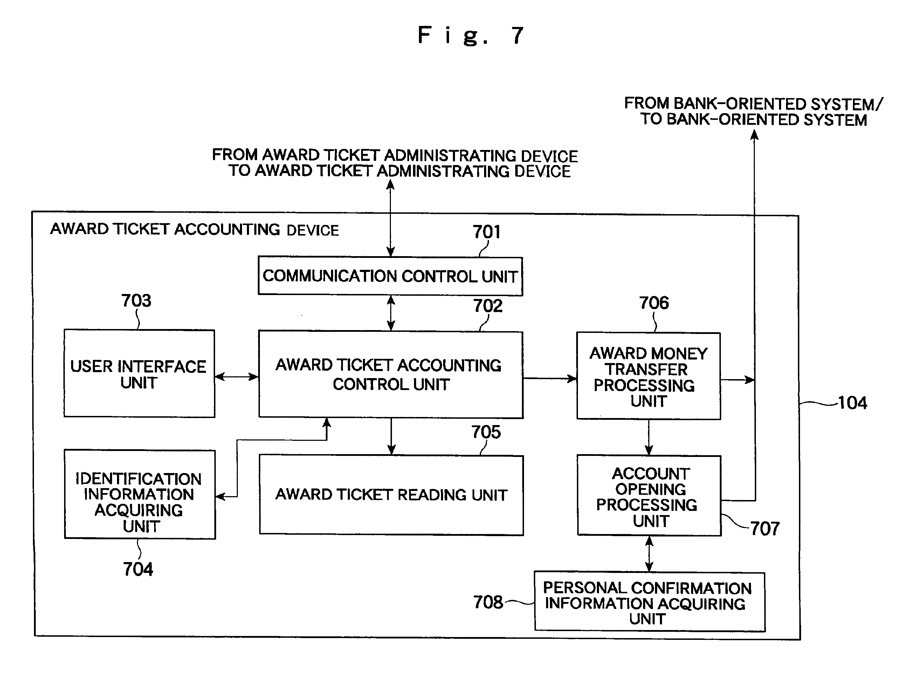

Fig. 7 is a functional block diagram showing a constitutional example of the award ticket accounting device 104. In the constitutional example shown in the drawing, the award ticket accounting device 104 includes a communication control unit 701 which is connected with the award ticket administrating device 101, an award ticket accounting control unit 702 which is connected with the communication control unit 701, a user interface unit 703, an identification information acquiring unit 704, an award ticket reading unit 705 and an awardmoney transfer processing unit 706 which are connected with the award ticket accounting control unit 702, an account opening processing unit 707 which is connected with the award money transfer processing unit 706, and a personal confirmation information acquiring unit 708 which is connected with the account opening processing unit 707. Here, the award money transfer processing unit 706 and the account opening processing unit 707 are communicably connected with the bank-oriented system 20.

The communication control unit 701 has a function of establishing the connection with the award ticket administrating device 102 so as to perform the transmission/reception of data by executing the given communication protocol (protocol stack).

The award ticket accounting control unit 702 performs the overall control of operations including the instruction of operation starting timing and the instruction of the completion of the operation of the communication control unit 701, the user interface unit 703, the identification information acquiring unit 704, the award ticket issuing unit 705 and the award money transfer processing unit 706. Further, the award ticket accounting control unit 702 performs the personal determination by collating the identification information which is acquired by the identification information acquiring unit 704 with the identification information 603 stored in the award ticket 105. When the personal determination proves to be successful, the award ticket accounting control unit 702 transmits the various information (the award amount information 402, the transfer destination account 604 and the like) which are stored in the award ticket 105 to the award money transfer processing unit 706 and instructs the award money transfer processing unit 706 to perform the transfer processing of the award money.

The user interface unit 703 has a function of transmitting messages related to the accounting of the award ticket to the user as well as a function of receiving the inputting of the user and, for example, includes a liquid crystal touch panel and a driver thereof. That is, the user interface unit 703 suitably generates and displays messages such as "Account the award ticket ? YES/NO", "Confirm identification. Place your right forefinger on a scanner.", "The accounting of the award ticket is completed. The award money of 10, 000 dollars is transferred to the account number 123456 of New York Branch of the Metropolitan Bank designated by the user", "The transfer destination account is not yet designated. Open a new transfer destination account? YES/NO", "Submit the personal confirmation information necessary for opening the account.", an execution button, a confirmation button, a cancellation button and the like.

The identification information acquiring unit 704 includes a function of acquiring the identification information of a person who requests the accounting of the award ticket 105. This identification information is of the same kind as the identification information acquired by the award ticket issuing device 103. The acquired identification information is transmitted to the award ticket accounting control unit 702 and is served for the person determination processing.

The award ticket reading unit 705 has a function of reading the data written in the award ticket 105 which is submitted by the person who requests the accounting of the award ticket 105 and of transmitting the data to the award ticket accounting control unit 702. With respect to the award ticket reading unit 705, for example, a card reader for a magnetic card or an IC card or a communication mechanism (an infrared communication mechanism, Bluetooth or the like) which can transmit data to a mobile telephone when the storage medium is a mobile phone can be used as the award ticket issuing unit 705.

The award money transfer processing unit 706, when the award ticket accounting control unit 702 is successful in the personal determination, has a function of requesting the bank-oriented system 20 to transfer the award money to the transfer destination account based on the information written in the award ticket 105 and the like as wells as a function of instructing the account opening processing unit 707 to perform the new account opening processing when the transfer destination account is not designated.

The account opening processing unit 707 has a function of requesting the bank-oriented system 20 to open the new transfer destination account for the holder of the award ticket in response to the instruction from the award money transfer processing unit 706 and, at the same time, a function of providing the information necessary to open the account to the bank-oriented system 20. As the information necessary to open the account, in addition to the address and the name of the user, data written in an identification card or the user himself/herself or any item corresponding to the identification card may be transmitted to the bank-oriented system.

The personal confirmation information acquiring unit 708 has a function of reading the data of the above-mentioned identification card and of transmitting the data to the account opening processing unit 707. With respect to the identification card, any card is available provided that a financial institution recognizes the card as a personal confirmation reference at the time of opening the account. As such an identification card, for example, a driver license, a passport, a resident resistor card, an alien registration card (in the People's Republic of China, a resident identification card of a Chinese citizen living in a continental region, a temporally resident identification card, a Chinese citizen census record registering a citizen of not more than 16 years old in a continental region, a people's revelation army soldier identification card, a Chinese civil armed police identification card a continent travel pass for a resident living in Hong Kong or Macao, a continent travel pass for a resident living in Taiwan, other travel identification card, a foreigners passport or the like) can be named. These identification cards are optically or electronically read and are transmitted to the bank-oriented system as references for examining the validity of opening the account. The personal confirmation information acquiring unit 708 has a function of optically or electrically reading such an identification card and of forming data and is constituted of an optical scanner, for example.

The account opening processing unit 707 transmits an account opening request to the bank-oriented system 20 together with the personal confirmation information and the bank-oriented system 20 opens an account in response to this request and notifies an account number of the account and the like to the account opening processing unit 707. Then, the award money transfer processing unit 706 requests the bank-oriented system 20 to transfer an amount corresponding to the above-mentioned award money to the transfer destination account having the account number.

### [Operational example of award ticket accounting device]

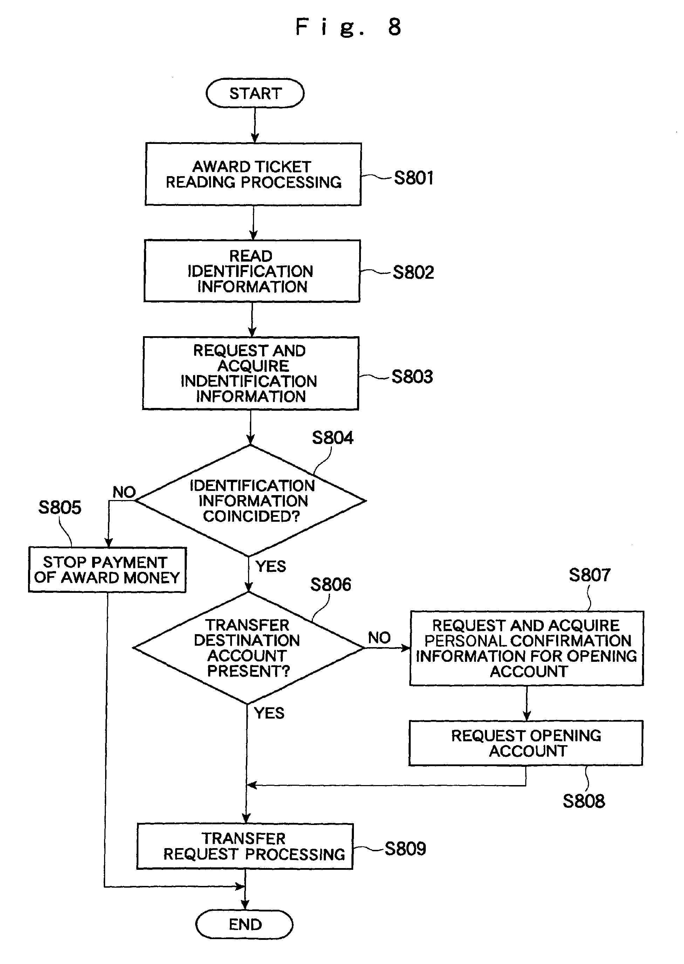

Next, an operational example of the award ticket accounting device 104 is explained in conjunction with Fig. 8. Fig. 8 is a flow chart showing the operational example of the award ticket accounting device 104.

When the user requests the accounting processing of the award ticket 105 by touching the user interface unit 703 of the award ticket accounting device 104, the award ticket accounting device 104, first of all, performs the reading processing of the award ticket 105 (step S801) . For example, the award ticket accounting device 104 urges the user to insert the award ticket 105 into a card reader which constitutes the award ticket reading unit 705. When the user inserts the award ticket 105 into the card reader (award ticket reading unit 705), the card reader reads the data written in the award ticket 105 and transmits the data to the award ticket accounting control unit 702.

The award ticket accounting control unit 702 acquires the identification information based on the received data (step S802). When the identification information is written in the award ticket 105, the award ticket accounting control unit 702 holds the identification information.

Next, the award ticket accounting device 104 requests the identification information to the user and performs the identification of the person who requests the accounting by the identification information acquiring unit 704 (step S803). For example, the award ticket accounting device 104 instructs the user interface unit 703 to display a message "The identification is performed. Place your right forefinger on a scanner." and urges the user to provide fingerprint information which constitutes the identification information. The identification information acquiring unit 704 optically reads the fingerprint information, generates a characteristic pattern from this optically obtained image data, and transmits the image data to the award ticket accounting control unit 702 as the identification information.

The award ticket accounting device 104 compares the identification information obtained from the award ticket 105 by the award ticket accounting control unit 702 with the identification information obtained by the identification information acquiring unit 704 and determines whether these identification information coincide with each other or not (step S804). When these identification information do not coincide with each other (step S804, No) , the award ticket accounting device 104 stops the award ticket accounting processing (step S805) and finishes the whole processing. Accordingly, it is possible to prevent the illegal acquisition of the award money by a person who disguises as the user.

On the other hand, when the identification information coincide with each other (step S804, Yes), the award ticket accounting device 104 checks whether the transfer destination account of the award money is present or not in the award money transfer processing unit 706 (step S806) . When the transfer destination account is present (step S806, Yes), the award money transfer processing unit 706 executes the transfer processing which transmits a transfer request to the bank-oriented system 20 such that the bank-oriented system 20 transfers the award amount to the designated transfer destination account (step S807) and, thereafter, the whole processing is finished. The bank-oriented system 20 performs the transfer of the amount corresponding to the award money to the personal account of the user which is designated transfer destination account from the payer's account, (for example, the account of the administrator of the award money payment system) based on this transfer request. With respect to the transferred award money, the user can withdraw the award money in cash or the like using an ATM or the like which is connected with the bank-oriented system 20 or can make use of the award money for various payments.

On the other hand, when the transfer destination account is not present (step S806, No), the award ticket accounting device 104 requests the personal confirmation information for opening the account to the user and acquires the personal confirmation information (step S808). When the award money transfer processing unit 706 determines that the data of the transfer destination account is not recorded, the award money transfer processing unit 706 instructs the account opening processing unit 707 to execute the account opening processing. The account opening processing unit 707 instructs the user interface unit 703 to display a predeterminedmessageandacquiresthepersonalconfirmation information from the personal confirmation information acquiring unit 708.

Next, the award ticket accounting device 104 transmits the account opening request to the bank-oriented system 20 together with the personal confirmation information (step S809) . When the bank-oriented system20 approves the opening of the account and informs the award ticket accounting device 104 of the information necessary for the transfer such as the account number, the award ticket accounting device 104 which receives the information performs the transfer processing which transmits the transfer request to the bank-oriented system 20 such that the bank-oriented system 20 transfers the award amount to the designated transfer destination account (step S807) and, thereafter, finishes the whole processing. The bank-oriented system 20 performs the transfer of the amount corresponding to the award money to the personal account of the user which is the newly opened transfer destination account from the payer's account of the award money, (for example, the account of the administrator of the award money payment system) based on this transfer request. With respect to transferred award money, the user can withdraw the award money in cash or the like using an ATM or the like which is connected with the bank-oriented system 20 or can make use of the award money for various payments. By performing the processing in steps S808, S809, the user who is not prepared with the transfer destination account can also make use of the award money payment system according to this embodiment at any time.

The description made above explains the operational example of the award ticket accounting device 104.

### [With respect to an operational example of the award money payment system]

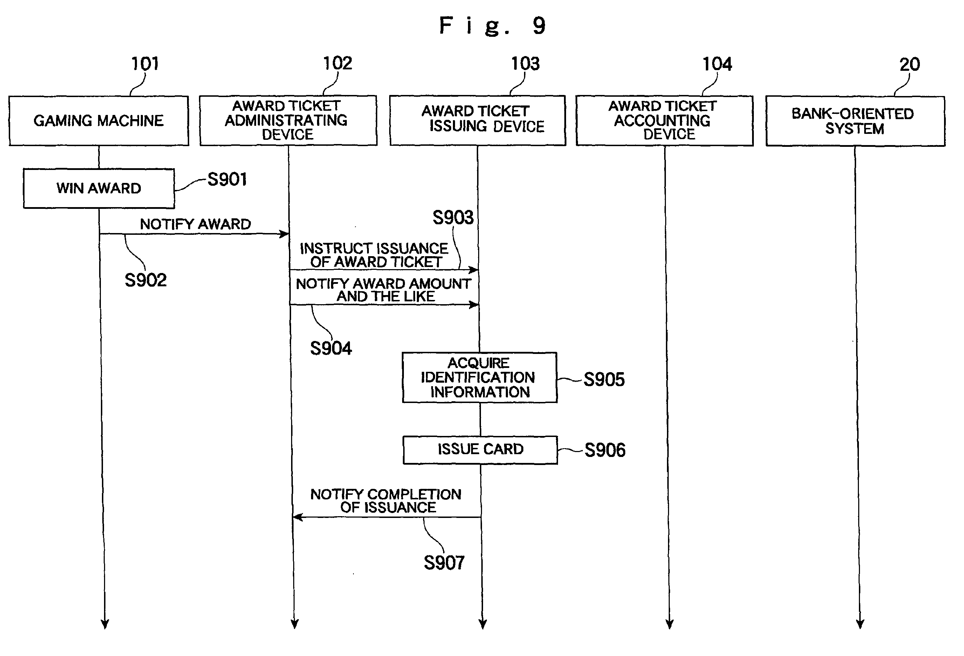

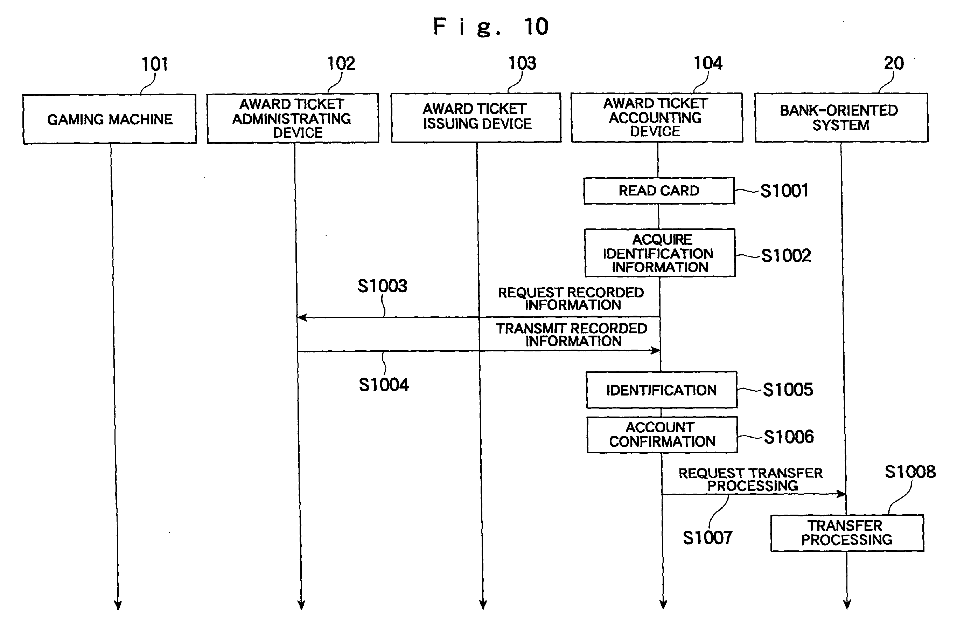

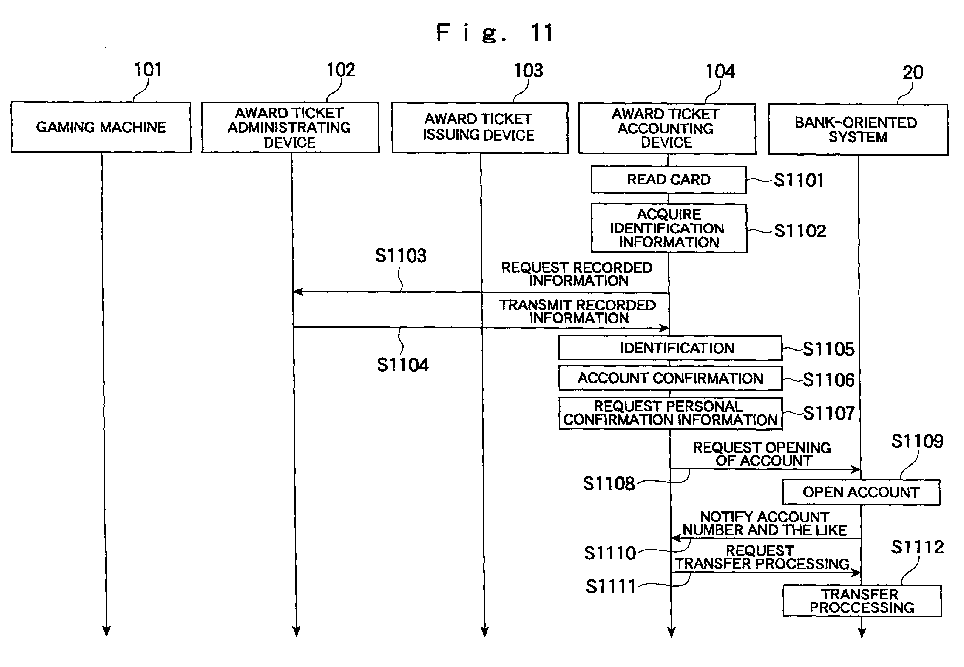

Next, an operational example of the award money payment system according to this embodiment is explained in conjunction with Fig. 9 to Fig. 11. Fig. 9 is a sequence diagram showing the operational example of the award money payment system, while Fig. 10 and Fig. 11 are sequence diagrams, wherein the sequences shown in these drawings respectively follow the sequence shown in Fig. 9.

First of all, the operational example up to the issuing of the award ticket 105 is explained in conjunction with Fig. 9.

Assume that the user wins the award in the game using the gaming machine 101 and the award money is produced (step S901). Then, the gaming machine 101 notifies the award ticket administrating device 102 that the user wins the award and the award amount thereof (step S902). In response to the notification, the award ticket administrating device 102 performs the issuing and the recording of the award ticket ID 401 and, thereafter, performs the storing of the award amount information 402.

Next, the award ticket administrating device 102 transmits the award ticket issuing instruction to the award ticket issuing device 103 (step S903). Further, the award ticket administrating device 102 transmits the information necessary for issuing the award ticket 105 (for example, the award ticket ID 401, the award amount information 402 and, further, the transfer destination account 407 when the account 407 is present and the like) to the award ticket issuing device 103 (step S904).

The award ticket issuing device 103 urges the user to input the identification information. When the user responds to this urging, the award ticket issuing device 103 acquires the identification information (step S905). The award ticket issuing device 103, by writing the various information which are acquired in the step S904 and the identification information which is acquired in the step S905 to the storage medium which constitutes the award ticket 105, performs the issuing of the award ticket 105 (step S906) . The issued award ticket 105 is acquired by the user and the user has only to keep the award ticket 105 until the user performs the accounting of the award ticket 105.

Further, it may be possible that when the issuing of the award ticket (step S906) is completed, the award ticket issuing device 103 informs the award ticket administrating device 102 that the issuing of the award ticket 105 is completed (step S907). The award ticket administrating device 102, by storing the issuing date of the award ticket 105, can administrate the period of validity (for example, the accounting of the award ticket 105 can be performed within one month from the issuing of the ticket and, after one month has passed, the award ticket 105 becomes invalid or the like) .

Next, the operational example of the award money payment system according this embodiment at the accounting of the award ticket is explained in conjunction with Fig. 10 and Fig. 11. Fig. 10 is a sequence diagram showing an operational example when the transfer destination account for the award money is present.

First of all, to request the award money payment processing, the bearer of the award ticket 105 instructs the award ticket accounting device 104 to perform the reading out of the award ticket 105 (step S1001). To identify the bearer of the award ticket as the person to whom the award ticket is issued, the award ticket accounting device 104 requests the user to input the identification information and acquires the identification information of the user who responds to this inputting (step S1002) . Further, the award ticket accounting device 104 requests the award ticket administrating device 102 to transmit the information 600 in which information with respect to the award ticket 105 is stored (step S1003). In response to the request, the award ticket administrating device 102 transmits the information 600 or the like which the award ticket administrating device 102 stores to the award ticket accounting device 104 (step S1004).

The award ticket accounting device 104 compares and contrasts the identification information of the bearer of the award ticket and the identification information 603 which is recorded in the award ticket 105 and/or the identification information 403 which is stored in the award ticket administrating device 102 and determines whether the identification information coincide with each other or not (step S1005) . When the identification information coincide with each other, the processing is continued assuming that the identification is established. The award ticket accounting device 104 determines whether the transfer destination account for the award money is present or not from the transfer destination account 604 which is recorded in the award ticket 105 and/or the transfer destination account 407 which is stored in the award ticket administrating device 102 (step S1006) and, when the transfer destination account is present, transmits the transfer processing request to the bank-oriented system 20 (step S1007). In response to this transfer processing request, the bank-oriented system 20 performs the processing to transfer the amount corresponding to the award money to the transfer destination account.

The description made above explains the award ticket accounting processing (the award ticket payment processing) by the award money payment system according to the present invention when the transfer destination account is present.

Next, the accounting operational example of the award ticket by this award money payment system when the transfer destination account is not present (the transfer destination account is not designated) is explained in conjunction with Fig. 11.

First of all, to request the award money payment processing, the holder of the award ticket 105 instructs the award ticket accounting device 104 to perform the reading out of the award ticket 105 (step S1101). To identify the holder of the award ticket as the person to whom the award ticket is issued, the award ticket accounting device 104 requests the user to input the identification information and acquires the identification information of the user who responds to the request (step S1102). Further, the award ticket accounting device 104 requests the award ticket administrating device 102 to transmit the information 600 in which information with respect to the award ticket 105 is stored (step S1103). In response to this request, the award ticket administrating device 102 transmits the information 600 or the like which is stored in the award ticket administrating device 102 to the award ticket accounting device 104 (step S1104).

The award ticket accounting device 104 compares and contrasts the identification information of the bearer of the award ticket and the identification information 603 which is written in the award ticket 105 and/or the identification information 403 which is stored in the award ticket administrating device 102 and determines whether the identification information coincide with each other or not (step S1105) . When the identification information coincide with each other, the processing is continued assuming that the identification is established. The award ticket accounting device 104 determines whether the transfer destination account for the award money is present or not from the transfer destination account 604 which is written in the award ticket 105 and/or the transfer destination account 407 which is stored in the award ticket administrating device 102 (step S1106). When the transfer destination account is not present, the award ticket accounting device 104 requests the user for the personal confirmation information (step S1107) and, when the user inputs the personal confirmation information in response to this request, the award ticket accounting device 104 transmits the request for the opening of account together with this personal confirmation information to the bank-oriented system 20 (step S1108). In the bank-oriented system 20, the examination of the request for the opening of account is performed using the personal confirmation information and, when it is determined that the request is authentic, performs the account opening processing (step S1109) and notifies the account number and the like to the award ticket accounting device 104 (step S1110).

The award ticket accounting device 104 which receives the notification of the account number and the like requests the bank-oriented system 20 to perform the transferring processing of the award money to the transfer destination account which is designated by this account number (step S1111). The bank-oriented system20 performs the processing in which the amount corresponding to the award money is transferred to the transfer destination account in response to the transfer processing request.

The description made above explains the award ticket accounting processing (the award ticket payment processing) by the award money payment system according to the present invention when the transfer destination account is not present.

### [Modification and the others]

(1) Although, in the above-mentioned embodiment, the identification information of the holder of the award ticket (the person to whom the award ticket is issued) is stored in the award ticket 105 or the award ticket administrating device 102, the present invention is also established by the constitution in which an identification server which stores and administrates the identification information is provided separately and the award ticket accounting device 104 accesses this identification server and acquires the identification information of the holder of the award ticket (the person to whom the award ticket is issued).
(2) Although the above-mentioned embodiment has the constitution in which the award ticket administrating device 102 is provided to store and administrate the information with respect to the award ticket 105, the present invention is also established by the constitution in which all of the information with respect to the award ticket 105 is stored in the award ticket 105 and the award ticket administrating device 102 is not provided.
(3) Although the above-mentioned embodiment has the constitution in which the requesting of the opening of the transfer destination account is transmitted from the award ticket accounting device 104 to the bank-oriented system 20, the present invention is also established by the constitution in which the award ticket administrating device 102 determines the presence or the non-presence of the transfer destination account and, when the account is not present, the award ticket administrating device 102 transmits the requesting of the opening of a transfer destination account from the award ticket accounting device 104 to the bank-oriented system 20.
(4) Although the above-mentioned embodiment has the constitution in which the determination of the identification information is performed by the award ticket accounting device 104, the identification information of the bearer of the award ticket 105 may be transmitted from the award ticket accounting device 104 to the award ticket administrating device 102 so that the determination of the coincidence of the identification information is performed by the award ticket administrating device 102. Further, the present invention is also established by the constitution in which, instead of the award ticket accounting device 104, the award ticket administrating device 102 transmits the request for transferring the award money to the bank-oriented system 20.

## Claims

1. An award money payment system (10) for paying out a predetermined award money to a user when the user wins an award in a game, the award money payment system (10) comprising:
an award ticket issuing device (103)which prepares and issues an award ticket which is related with identification information of the user when the user wins the award in the game; and
an award ticket accounting device (104) which reads out information recorded in the award ticket and transfers an award money to a designated transfer destination account on a condition that identification of an award ticket bearer is established.

2. An award money payment system (10) according to claim 1, wherein when the transfer destination account is not designated, the award ticket accounting device (104) acquires the identification information of the bearer of the award ticket, requests the opening of account together with the identification information, and requests the transfer of the award money to the transfer destination account which is opened in response to the request for the opening of the account.

3. An award ticket issuing device (103) comprising:
an identification information acquiring unit (504) which acquires identification information of a holder of an award ticket upon reception of a notification of an award; and
an award ticket issuing unit (505) which writes the identification information which is acquired by the identification information acquiring unit (504), award ticket identification information and award amount information in a storage medium which constitutes an award ticket in a state that the identification information and the award ticket identification information are related to each other.

4. An award ticket accounting device (104) comprising:
an identification information acquiring unit (704) which acquires identification information of a bearer of an award ticket;
an award ticket accounting control unit (702) which reads information stored in the award ticket, acquires the identification information of a holder of the award ticket based on the information stored in the award ticket, and performs identification using the identification information of the bearer of the award ticket acquired by the identification information acquiring unit (704) and the identification information of the holder of the award ticket;
an account opening unit (707) which requests the opening of a transfer destination account which constitutes a transfer destination of the award money on a condition that the identification is successfully performed by the award ticket accounting control unit (702); and
a transfer processing unit (706) which allows the transfer of the award money to the transfer destination account which is opened in response to the request of the account opening processing unit (707).

5. An award ticket accounting device (104) according to claim 4, further comprising a personal confirmation information acquiring unit (708) which acquires personal confirmation information of the bearer of the award ticket, wherein the account opening unit (707) requests the opening of transfer destination account together with the personal confirmation information which is acquired by the personal confirmation information acquiring unit (704).
